# EUROPÄISCHE PATENTANMELDUNG

(11) **EP 4 183 584 A1**
(43) Veröffentlichungstag der Anmeldung: **24.05.2023**
(21) Anmeldenummer: 22208532.6
(22) Anmeldetag: 21.11.2022
(51) Int. Cl.: B32B 27/36, B32B 27/08, B32B 33/00, C08J 5/18, C08J 11/16, C08L 67/02

(54) **REZYKLIERBARER PET-FILM**

(30) Priorität: 22.11.2021 DE 102021130531
(71) Anmelder: Mitsubishi Polyester Film GmbH, 65203 Wiesbaden (DE)
(72) Erfinder: Ünal, Alper, 55116 Mainz (DE); Herbst, Thiemo, 55116 Mainz (DE)
(74) Vertreter: Schweitzer, Klaus

(57) **Zusammenfassung**

Die vorliegende Erfindung betrifft eine mehrschichtige, koextrudierte Polyesterfolie umfassend mindestens eine Deckschicht (A) und eine Basisschicht (B), wobei die mindestens eine Deckschickt (A) zu mindestens 60 Gew.-% aus einem Copolyester besteht, der aus von Dicarbonsäuren und Diolen abgeleiteten Einheiten besteht, wobei
- die von Dicarbonsäuren abgeleiteten Einheiten mindestens 65 Mol-% an von Terephthalsäure abgeleiteten Einheiten
und mindestens 5 Mol-% an von 5-Sulfo-Isophthalsäure abgeleitete Einheiten umfassen, und
- die von Diolen abgeleiteten Einheiten mindestens 90 Mol-% an von Ethylenglykol abgeleiteten Einheiten umfassen.

Weiterhin betrifft die Vorliegende Erfindung ein Verfahren zur Herstellung der erfindungsgemäßen Folie, ihre Verwendung, sowie ein Verfahren zur Rezyklierung der erfindungsgemäßen Polyesterfolie.

## Beschreibung

Die vorliegende Erfindung betrifft eine mehrschichtige, koextrudierte Polyesterfolie umfassend mindestens eine Deckschicht (A) und eine Basisschicht (B), ein Verfahren zu ihrer Herstellung, ihre Verwendung, sowie ein Verfahren zur Rezyklierung einer Polyesterfolie.

In industriellen Anwendungen wird biaxial orientierte Polyesterfolie häufig als Prozesshilfsmittel verwendet, z.B. als Trägerfolie, die nach Verwendung bzw. Applikation entsorgt werden muss. Beispiele sind silikonisierte Folien für die Applikation von Etiketten oder Folien, die im Bereich Prägedruck verwendet werden und mit verschiedenen Lack- und Metallschichten versehen werden. Nach erfolgter Verwendung bleibt diese Prozessfolie zurück und muss entsorgt werden. Im Fall einer mit Lack- und Metallschichten versehenen Prägefolie wird aus einer vollflächig beschichteten Prägefolie ein Bild auf ein Substrat übertragen, wobei ein Negativ dieses Bildes prozessbedingt auf der Prägefolie verbleibt und nicht mehr verwendet werden kann. Die Reste dieses Prozesses sind also naturgemäß kein blanker Polyester, sondern stark verunreinigt und nicht direkt rezyklierbar.

Im Fall einer Prozessfolie für die Applikation von Etiketten ist die zurückbleibende silikonisierte Folie im Allgemeinen verunreinigt. Verbliebene Etiketten, Klebestellen und allgemeine Verunreinigungen die bei der Sammlung anfallen kontaminieren den Polyesterrohstoff und verhindern ein direktes Recycling.

Direktes Recycling in diesem Zusammenhang bezeichnet einen industriellen Prozess, in dem die Abfälle voll automatisiert zu neuem Rohstoff aufbereitet werden können, ohne die Notwendigkeit einer manuellen Sortierung oder Reinigung der Abfälle, die die Kosten für das Recycling deutlich erhöhen würde.

Wenn ein direktes Recycling nicht möglich ist, so können die Abfälle mit Hilfe von weiteren Verarbeitungsschritten rezykliert werden. Beim Downcycling werden die Abfälle oft zusammen mit Abfällen aus anderen Prozessen der Herstellung von minderwertigen Anwendungen zugeführt. Dabei ist es aufgrund der vielen möglichen Abfallquellen oft notwendig einen Sortierschritt einzuschließen, um zumindest eine grobe Sortenreinheit bezüglich des Polymers zu erreichen. Dies kann z.B. eine Trennung von leichten und schweren Teilen im Luftstrom beinhalten oder ein sogenanntes Float-sink-Verfahren, bei dem in einem Wasserbad leichtere Kunststoffe (mit einer Dichte < 1 g/ccm) aufschwimmen und vom Polyesteranteil (mit einer Dichte > 1 g/ccm) getrennt werden können. Auf diese Weise lassen sich Polyester von Polyolefinen abtrennen.

Sollen die Abfälle jedoch nicht minderwertigen, sondern gleichwertigen oder sogar höherwertigen Anwendungen verfügbar gemacht werden, so ist neben der Sortenreinheit ein zusätzlicher Reinigungsschritt notwendig, um anhaftende Verschmutzungen bzw. Kontaminationen durch Fremdmaterial zu beseitigen. Dieser Reinigungsschritt umfasst beispielsweise Waschprozesse mit Hilfe von wässrigen Waschlaugen, wodurch anhaftende Verunreinigungen entfernt werden, und das so gewonnene Rezyklat einer erneuten Verarbeitung zugeführt werden kann (z.B. Extrusion).

### Stand der Technik

Polyesterfolie ist intrinsisch hervorragend direkt rezyklierbar, da PET bei geeigneter Aufarbeitung praktisch ohne Einschränkung immer wieder verwendet werden kann. So beschreibt EP 1 612 237 einen Prozess, in dem sortenreine Folienreste (Folienabschnitt, Randsäumer) zunächst zerkleinert, durch Vakuumkondensation nachbehandelt, und anschließend zu Granulat extrudiert werden, so dass der so gewonnene Rohstoff erneut der Folienproduktion zugeführt werden kann.

Die Herausforderung bei Abfällen von Prozessfolien, die als Trägerfolie bereits mehrere übergeordnete Verarbeitungsprozesse durchlaufen haben, besteht darin, anhaftende Verschmutzungen einfach abzutrennen.

Derzeit ist keine biaxial orientierte Polyesterfolie bekannt, die nach ihrer Verwendung durch einfache industrieübliche Waschprozesse von anhaftenden Resten (wie sie bspw. aus hot-stamping Prozessen resultieren) zu befreien ist, so dass ihre gereinigten Überreste einem direkten Recycling zu neuer Polyesterfolie zugeführt werden können. Bisherige Prozessfolien lassen sich nach ihrer Benutzung lediglich zu minderwertigem Rezyklat verarbeiten, welches keinem Folienherstellungsprozess mehr zugeführt werden kann, sondern nur noch Anwendungen mit niedrigeren Ansprüchen, wie beispielsweise Textilfasern. Das Anfallen von minderwertigem Regenerat ist nicht erwünscht.

Typischerweise können Prozessfolien optional mit einer funktionsvermittelnden Beschichtung versehen werden. Je nach Anwendung umfasst dies beispielsweise Haftungsvermittler, oder gegenteilige Trennschichten. Um solche Beschichtungen auf der Folie sicher aufbringen zu können, muss sichergestellt sein, dass die Oberfläche der Polyesterfolie unempfindlich gegenüber Feuchtigkeitseinflüssen ist. Auch muss die Verankerung der Beschichtung auf der Folienoberfläche gewährleistet sein. Durch Verwendung von standardmäßigen Polyesterrohstoffen, die in der Regel auf Ethylenglykol- und Terephthalsäure- Einheiten zurückzuführen sind, ist eine ausreichende Beschichtbarkeit gegeben. Jedoch steht genau jene Unempfindlichkeit der Folie gegenüber Feuchtigkeit dem eigentlichen Zweck der Erfindung entgegen, mittels einfacher Waschprozesse die Ablösung von Schmutz auf der Oberfläche zu erleichtern, und damit eine direkte Rezyklierbarkeit zu ermöglichen. Polyesterfolien, die eine zur Auftragung einer Beschichtung geeignete Oberfläche aufweisen, und gleichzeitig erhöhte Lösbarkeit zeigen, sind im Stand der Technik nicht beschrieben. Hingegen finden sich artverwandte Lösungen auf ähnlichen technischen Gebieten.

JP2002265665A beschreibt eine Trennfolie mit einer aus leichtlöslichen Rohstoffen aufgebauten Trennschicht, die nach Benutzung der Folie mit Hilfe von Lösemitteln abgelöst werden kann. Die zurückbleibende Basisfolie kann so wiedergewonnen werden. Als Materialien für die leichtlöslichen Rohstoffe werden neben nicht weiter spezifizierten Polyestern außerdem Polyester-urethane, acrylische Rohstoffe, EVOH und PVOH vorgeschlagen, wobei Polyvinylalkohole favorisiert werden. Zusätzlich werden Hydroxy-, Carboxy-, Sulfonat-, Carboxylatgruppen als funktionelle Gruppen genannt, die in dem wasserlöslichen Rohstoff vorhanden sein können. Zur Wiedergewinnung der Basisschicht wird die Folie im Falle der PVOH Schicht bei Raumtemperatur mit Wasser, im Falle der Schicht aus wasserlöslichem Polyester mit Wasser bei 70°C, oder im Falle der Schicht aus Polymilchsäure mit NMP bei 60°C gewaschen und anschließend getrocknet. Die so hergestellten Folien zeigen zwar den erwünschten Effekt, dass die Oberfläche leicht ablösbar ist, jedoch zeigen rein in Wasser lösliche Oberflächen eine hohe Sensibilität gegenüber Feuchtigkeit auf, was insbesondere einer längeren Lagerung der Folie entgegensteht.

Folien, die unempfindlich gegenüber Feuchtigkeitseinflüssen sind und gleichzeitig gute Abwaschbarkeit durch einen industriellen Waschprozess aufweisen, sucht man im Stand der Technik vergeblich.

### Aufgabe

Die Aufgabe der vorliegenden Erfindung besteht darin eine biaxial orientierte Polyesterfolie (BoPET, im Folgenden Polyesterfolie) bereitzustellen, deren Eigenschaften in Bezug auf mechanische, thermische und chemische Beständigkeit weitgehend identisch ist mit einer herkömmlichen biaxial orientierten Polyesterfolie und die nach Nutzung so aufbereitet werden kann, dass sie als Resultat einem direkten Recycling zu neuwertiger biaxial orientierter Polyesterfolie zugeführt werden kann und dadurch Downcycling vermieden wird.

Gelöst wird die Aufgabe durch die erfindungsgemäße, mehrschichtige, koextrudierte Polyesterfolie umfassend mindestens eine Deckschicht (A) und eine Basisschicht (B), wobei
die mindestens eine Deckschickt (A) zu mindestens 60 Gew.-% aus einem Copolyester besteht, der aus von Dicarbonsäuren und Diolen abgeleiteten Einheiten besteht, wobei
- die von Dicarbonsäuren abgeleiteten Einheiten mindestens 65 Mol-% an von Terephthalsäure abgeleiteten Einheiten
   und mindestens 5 Mol-% an von 5-Sulfo-lsophthalsäure abgeleitete Einheiten umfassen, und
- die von Diolen abgeleiteten Einheiten mindestens 90 Mol-% an von Ethylenglykol abgeleiteten Einheiten umfassen.

### Detailbeschreibung

### Polyesterfolie

Die vorliegende Erfindung betrifft eine mehrschichtige, koextrudierte Polyesterfolie umfassend mindestens eine Deckschicht (A) und eine Basisschicht (B), wobei
die mindestens eine Deckschickt (A) zu mindestens 60 Gew.-% aus einem Copolyester besteht, der aus von Dicarbonsäuren und Diolen abgeleiteten Einheiten besteht, wobei
- die von Dicarbonsäuren abgeleiteten Einheiten mindestens 65 Mol-% an von Terephthalsäure abgeleiteten Einheiten
   und mindestens 5 Mol-% an von 5-Sulfo-lsophthalsäure abgeleitete Einheiten umfassen, und
- die von Diolen abgeleiteten Einheiten mindestens 90 Mol-% an von Ethylenglykol abgeleiteten Einheiten umfassen.

Erfindungsgemäß besteht die mindestens eine Deckschickt (A) zu mindestens 60 Gew.-%, bevorzugt zu mindestens 70 Gew.-%, besonders bevorzugt zu mindestens 80 Gew.-% aus einem Copolyester, der aus von Dicarbonsäuren und Diolen abgeleiteten Einheiten besteht. Die restlichen maximal 40 Gew.-%, bevorzugt maximal 30 Gew.-%, besonders bevorzugt maximal 20 Gew.-% bestehen aus Polyethylenterephthalat

Neben dem genannten Copolyester kann die Deckschicht (A) Additive aufweisen, um beispielsweise das Wickelverhalten der Folie zu optimieren.

Um eine Polyesterfolie bereitstellen zu können, die nach entsprechender Waschbehandlung einem direkten Rezyklierverfahren zugänglich ist, wird eine mindestens 2-schichtige Folie benötigt, deren Hauptbestandteile Polyester sind. Eine der Schichten bildet die Basisschicht (B) der Folie und fungiert als das tragende Element im Folienaufbau. Dabei kann die Basisschicht (B) selbst mehrere Schichten umfassen, beispielsweise aus unterschiedlichen Polyestern, wenn dies notwendig sein sollte. Neben der Basisschicht (B) besteht die Folie aus mindestens einer weiteren Schicht, die zusammen mit der Basisschicht koextrudiert wird, und eine lösliche Deckschicht (A) der Folie bildet.

Zusätzlich kann die erfindungsgemäße Polyesterfolie eine zweite Deckschicht (A) umfassen. In diesem Fall stellt die mindestens eine Deckschicht (A) eine erste Deckschicht (A) dar und die Polyesterfolie umfasst zusätzlich eine zweite Deckschicht (A), die auf der der ersten Deckschicht (A) gegenüberliegenden Oberfläche der Polyesterfolie aufgebracht ist. Die erste Deckschicht (A) und die zweite Deckschicht (A) sind identisch aufgebaut, das heißt, sie bestehen aus einem identischen Copolyester. Jedoch kann die Dicke der ersten Deckschicht (A) und der zweiten Deckschicht (A) unterschiedlich sein.

Folglich betrifft die vorliegende Erfindung eine Polyesterfolie, bei der die mindestens eine Deckschicht (A) eine erste Deckschicht (A) darstellt und die Polyesterfolie zusätzlich eine zweite Deckschicht (A) umfasst, die auf der der ersten Deckschicht (A) gegenüberliegenden Oberfläche der Polyesterfolie aufgebracht ist.

Alternativ kann die erfindungsgemäße Polyesterfolie eine Deckschicht (C) umfassen, die auf der der ersten Deckschicht (A) gegenüberliegenden Oberfläche der Polyesterfolie aufgebracht ist. In diesem Fall umfasst die Polyesterfolie eine Deckschicht (A), die auf einer Seite der Polyesterfolie aufgebracht ist und eine Deckschicht (C), die auf der der Deckschicht (A) gegenüberliegenden Seite der Polyesterfolie aufgebracht ist.

Die Basisschicht (B) und die Deckschicht (C) enthalten bevorzugt mindestens 70 Gew.-%, besonders bevorzugt mindestens 90 Gew.-% thermoplastischen Polyester. Hierfür geeignet ist ein Polyester, der aus Ethylenglykol- und Terephthalsäure-Einheiten besteht (Polyethylenterephthalat, PET). Der Polyester in der Basisschicht (B) kann bis zu 40 Gew.-%, bevorzugt bis zu 20 Gew.-% Regenerat enthalten, das aus dem erfindungsgemäßen Verfahren zur Rezyklierung gewonnen wurde.

Gemäß der vorliegenden Erfindung ist die mindestens eine Deckschicht (A) dadurch ausgezeichnet, dass sich diese bei Kontakt mit einer wässrigen Alkalihydroxid-haltigen Lösung schneller auflöst als die übrigen Schichten der Polyesterfolie (Basisschicht (B) und ggf. die Deckschicht (C)).

Die Gesamtdicke der Polyesterfolie beträgt 4 bis 250 µm, bevorzugt 6 µm bis 125 µm, besonders bevorzugt 9 µm bis 75 µm. Dickere oder dünnere Folien sind grundsätzlich denkbar; jedoch ist die Handhabung (z.B. Aufrollen, Transportieren, Zerkleinern) von sehr dünnen oder sehr dicken Folien in der Regel mit Schwierigkeiten verbunden, weshalb sich diese Erfindung auf den genannten Dickenbereich konzentriert. Der Hauptanteil der Gesamtdicke entfällt dabei auf die Basisschicht (B), die typischerweise etwa 70 - 95 % der Gesamtfoliendicke ausmacht. Die mindestens eine Deckschicht (A) macht 5 bis 20%, bevorzugt 5 bis 10 % der Gesamtfoliendicke aus. Wenn die Polyesterfolie eine erste Deckschicht (A) und eine zweite Deckschicht (A) umfasst, macht die Dicke der ersten Deckschicht (A) und der zweiten Deckschicht (A) unabhängig voneinander jeweils einen Anteil von 1 bis 20 % der Gesamtfoliendicke aus. Die absolute Dicke jeder Deckschicht (A) sollte unabhängig von der Gesamtfoliendicke jedoch 0,5 µm nicht unterschreiten, unabhängig davon, ob eine oder zwei Deckschichten (A) vorhanden sind. Bei weniger als 0,5 µm kann die vollständige Abwaschbarkeit von Verunreinigungen nicht mehr zuverlässig eingehalten werden. Die mindestens eine Deckschicht (A), oder falls vorhanden, die erste und die zweite Deckschicht (A) besitzen jeweils eine Dicke von 0,5 µm bis 6 µm, bevorzugt von 1 µm bis 3 µm. Höhere Dicken der Deckschicht (A) gehen mit größeren Verlusten an rezyklierbarem Material einher, was nicht im Sinne der Erfindung ist.

Es hat sich überraschend gezeigt, dass die Basisschicht (B), die Deckschicht (A) und falls vorhanden die Deckschicht (C) bezüglich ihrer Polymerzusammensetzung so gewählt werden können, dass im Waschprozess eine selektive Auflösbarkeit der Deckschickt (A) erreicht wird, die Basisschicht (B) und falls vorhanden die Deckschicht (C) hingegen nahezu unversehrt bleiben. Dies wird erreicht durch einen bestimmten Copolyester, der in der Deckschicht (A) zum Einsatz kommt, und eine Löslichkeit für wässrige Alkalihydroxid-haltige Lösungen aufweist. Dabei muss die Löslichkeit hoch genug sein damit die Deckschicht (A) innerhalb des Zeitraums des in Kontakt Bringens lösbar ist. Jedoch kann eine gut lösliche Deckschicht (A) negative Konsequenzen für die Folienoberfläche mit sich bringen. So kann die Folienoberfläche zu Verklebungen und zum Blocken neigen, wenn in Folge von Feuchtigkeitseinflüssen (bspw. Luftfeuchtigkeit während der Lagerung) der Lösungsvorgang unbeabsichtigt ausgelöst wird. Auch kann die Deckschicht (A) infolge einer frühzeitigen und schleichenden Lösemittelaufnahme ein Quellverhalten aufweisen, was in Konsequenz eine Deformation der Folie nach sich zieht, und insbesondere zur Bildung von sog. "Curling" führt. Daher muss zwischen leichter und mäßiger Löslichkeit abgewogen werden.

Die erfindungsgemäße Polyesterfolie eignet sich als Trägerfolie in Prägeanwendungen, für die eine einwandfreie Folienoberfläche zwingend notwendig ist. Einwandfrei bedeutet in dem Kontext insbesondere eine gewisse Beständigkeit gegenüber äußeren Einflüssen wie bspw. hohe Luftfeuchte, hohe Lagertemperaturen, und die Fähigkeit mit weiteren wässrigen Beschichtungen im Rahmen des Prägeverfahrens ausgestattet werden zu können.

Es wurde überraschend gefunden, dass der erfindungsgemäße Copolyester sowohl ein gutes Löslichkeitsverhalten, sowie Resistenz gegenüber Feuchteinflüssen in sich vereint, und darüber hinaus das Aufbringen einer optionalen Beschichtung auf die so ausgestattete Deckschicht (A) ermöglicht. Bei diesem Copolyester handelt es sich um einen Copolyester, bei dem zusätzlich zu den Monomeren Terephthalsäure und Ethylenglykol, die in PET immer enthalten sind, 5-Sulfo-lsophthalsäure copolymerisiert ist. Der Copolyester kann weitere von Dicarbonsäuren und Diolen abgeleitete Einheiten umfassen, wobei sich die von Dicarbonsäuren abgeleiteten Einheiten und die von Diolen abgeleiteten Einheiten jeweils zu 100 Mol-% addieren.

Wenn der Copolyester weitere von Dicarbonsäuren und Diolen abgeleitete Einheiten umfasst, sind diese bevorzugt von Isophthalsäure und Diethylenglykol abgeleitete Einheiten.

Gemäß der vorliegenden Erfindung ist es bevorzugt, dass die von Dicarbonsäuren abgeleiteten Einheiten aus 65 bis 95 Mol-%, bevorzugt 75 bis 95 Mol-%, besonders bevorzugt 88 bis 93 Mol-% von Terephthalsäure abgeleiteten Einheiten, 5 bis 15 Mol-%, bevorzugt 7 bis 13 Mol-% von 5-Sulfo-lsophthalsäure abgeleitete Einheiten und 0 bis 30 Mol-%, bevorzugt 0 bis 15 Mol-%, besonders bevorzugt 0 bis 7 Mol-% von Isophthalsäure abgeleitete Einheiten bestehen und die von Diolen abgeleiteten Einheiten aus 90 bis 100 Mol-%, bevorzugt 94 bis 98 Mol-% von Ethylenglykol abgeleiteten Einheiten und 0-10 Mol-%, bevorzugt 1 bis 7 Mol-% von Diethylenglykol abgeleiteten Einheiten bestehen, wobei sich die von Dicarbonsäuren abgeleiteten Einheit und die von Diolen abgeleiteten Einheiten jeweils zu 100 Mol-% addieren.

Besonders bevorzugt bestehen die von Dicarbonsäure abgeleiteten Einheiten aus 65 bis 95 Mol-%, bevorzugt 75 bis 95 Mol-%, besonders bevorzugt 88 bis 93 Mol-% von Terephthalsäure abgeleiteten Einheiten und 5 bis 15 Mol-%, bevorzugt 7 bis 13 Mol-% von 5-Sulfo-lsophthalsäure abgeleitete Einheiten, und die von Diolen abgeleiteten Einheiten aus 90 bis 100 Mol-%, bevorzugt 94 bis 98 Mol-% von Ethylenglykol abgeleiteten Einheiten und 0-10 Mol-%, bevorzugt 1 bis 7 Mol-% von Diethylenglykol abgeleiteten Einheiten, wobei sich die von Dicarbonsäuren abgeleiteten Einheit zu 100 Mol-% addieren.

Werden die angegebenen Mol-Bereiche unter- oder überschritten, so resultiert dies in einer veränderten Löslichkeit der Deckschicht (A), und die Polyesterfolie weist nicht mehr die gewünschte Abwaschbarkeit auf.

Für die wirtschaftliche Herstellbarkeit der Polyesterfolie ist die direkte Wiederverwendbarkeit von in der Produktion anfallenden unverkäuflichen Folienresten entscheidend. Diese werden üblicherweise gesammelt, gehäckselt und entweder direkt als Häcksel, oder nach vorheriger Extrusion und Granulierung zu Regenerat, dem Prozess erneut zugeführt. Bevorzugt wird das Regenerat nur der Basisschicht (B) zugeführt, so dass etwaige durch den Regenerierprozess hervorgerufene Verunreinigungen nicht in die Deckschichten (A) der Polyesterfolie gelangen, und so die Oberflächenbeschaffenheit negativ beeinflussen. Durch den Regenerierprozess kann es außerdem zu Gelbildung und Farbveränderungen durch Degradierungsprozesse während der Extrusion kommen. Dies tritt vermehrt auf, wenn unterschiedliche Polyestersorten (z. B. durch verschiedene Copolyester) gemeinsam extrudiert werden. Von daher war es überraschend, dass bei der Extrusion der erfindungsgemäßen Zusammensetzung lediglich eine Gelbildung auftrat, deren Ausprägung mit der von herkömmlicher Folie vergleichbar ist, und somit keine weiteren Maßnahmen erfordert.

Durch die Zuführung von Regenerat in die Basisschicht (B) der Polyesterfolie gelangt auch der Copolyester der Deckschicht (A) in die Basisschicht (B). Dies darf jedoch nicht dazu führen, dass die Basisschicht (B) dadurch ebenfalls eine Löslichkeit in der Alkalihydroxid-haltigen Lösung aufweist, und in Folge dessen eine selektive Ablösung der Deckschicht (A) von der Basisschicht (B) nicht mehr gewährleistet ist. Je nach Dicke der Deckschicht (A) im Verhältnis zur Gesamtfoliendicke, ergibt sich der Eintrag an Copolyester in die Basisschicht (B). Bei einem üblichen Anteil von pro Deckschicht 10% zur Gesamtfoliendicke würde sich bei beidseitiger Ausstattung einer Deckschicht (A) ein Eintrag von bis zu 20% Copolyester in die Basisschicht ergeben. Bei diesem Anteil darf die Basisschicht keine erhöhte Löslichkeit aufweisen. Durch die Verwendung der erfindungsgemäßen Zusammensetzung wird erreicht, dass die Basisschicht selbst dann keine erhöhte Löslichkeit aufweist, wenn über den Regeneratstrom Anteile des Copolyesters von bis zu 40 Gew.-% in die Basisschicht gelangen.

Darüber hinaus muss die Folie, bei gleichzeitiger leichter Löslichkeit an der Folienoberfläche, in der Lage sein eine Beschichtung tragen zu können, ohne dabei die Funktion der Beschichtung negativ zu beeinflussen. Eine solche Beschichtung kann eine Haftungsvermittlungsbeschichtung oder eine Beschichtung mit Release Eigenschaft, wie bspw. Silikonbeschichtungen, Wachse oder fluorierte Polymere sein. Auf der mindestens einen Deckschicht (A) der Polyesterfolie oder, falls zwei Deckschichten (A) vorhanden sind, auf der ersten Deckschicht (A) und auf der zweiten Deckschicht (A) kann eine Beschichtung aufgebracht sein. Bevorzugt ist die Beschichtung eine Haftvermittlungsbeschichtung oder eine Antihaftbeschichtung. Die Beschichtung ist bevorzugt mittels eines In-Line Verfahrens auf die mindestsens eine Deckschicht (A), oder falls vorhanden, auf die erste Deckschicht (A) und die zweite Deckschicht (A) aufgebracht. Alternativ dazu kann, wenn die Polyesterfolie nur eine Deckschicht (A) umfasst, die Beschichtung auch nur auf der Deckschicht (A) oder auf der Deckschicht (A) und auf der der Deckschicht (A) abgewandten Seite der Basisschicht (B) aufgebracht sein.

Wenn die Polyesterfolie die mindestens eine Deckschicht (A) und auf der der Deckschicht (A) gegenüberliegenden Oberfläche der Polyesterfolie eine Deckschicht (C) umfasst, kann nur die mindestens eine Deckschicht (A) eine Beschichtung tragen oder die mindestens eine Deckschicht (A) und die Deckschicht (C) können mit einer Beschichtung ausgestattet sein. Alternativ kann die Beschichtung nur auf der Deckschicht (C) aufgebracht sein.

Weiterhin betrifft die vorliegende Erfindung die Verwendung der erfindungsgemäßen Polyesterfolie als Trägerfolie, bevorzugt für Etiketten und Prägefolien.

### Verfahren zur Herstellung der erfindungsgemäßen Polyesterfolie

Die vorliegende Erfindung betriff ein Verfahren zur Herstellung einer erfindungsgemäßen Polyesterfolie, wobei man zunächst den Polyester bzw. die Polyestermischung der einzelnen Schichten der Folie in Extrudern aufschmilzt, die entstandenen Schmelzen in einer Mehrschichtdüse zu flachen Schmelzfilmen ausformt, durch eine Breitschlitzdüse presst und auf einer Kühlwalze und einer oder mehreren Abzugswalzen abzieht, wobei sie abkühlt und sich verfestigt, sodann biaxial streckt, nachfolgend thermofixiert und die Folie dann aufgewickelt,
dadurch gekennzeichnet, dass die mindestens eine Deckschickt (A) zu mindestens 60 Gew.-% aus einem Copolyester besteht, der aus von Dicarbonsäuren und Diolen abgeleiteten Einheiten besteht, wobei
- die von Dicarbonsäuren abgeleiteten Einheiten mindestens 65 Mol-% an von Terephthalsäure abgeleiteten Einheiten
   und mindestens 5 Mol-% an von 5-Sulfo-lsophthalsäure abgeleitete Einheiten umfassen, und
- die von Diolen abgeleiteten Einheiten mindestens 90 Mol-% an von Ethylenglykol abgeleiteten Einheiten umfassen.

Auf der mindestens einen Deckschicht (A) der Polyesterfolie oder, falls zwei Deckschichten (A) vorhanden sind, auf der ersten Deckschicht (A) und auf der zweiten Deckschicht (A) kann eine Beschichtung aufgebracht sein. Bevorzugt ist die Beschichtung eine Haftvermittlungsbeschichtung oder eine Antihaftbeschichtung, bevorzugt eine Haftvermittlungsbeschichtung. Zusätzlich kann, wenn auf die Polyesterfolie nur eine Deckschicht (A) aufgebracht wird, eine zusätzliche Deckschicht (C) auf der der Deckschicht (A) gegenüberliegenden Seite der Polyesterfolie aufgebracht werden.

Bevorzugt werden die Haftvermittlungsbeschichtung und die Antihaftbeschichtung In-Line beim Herstellungsprozess der biaxial orientierten Polyesterfolie aufgebracht. Dabei erfolgen der Antrag der Beschichtung (einseitig) bzw. der Beschichtungen (beidseitig) nach der Längs- und vor der Querstreckung (oder weniger bevorzugt bei einer Simultanstreckanlage vor der Längs- und Querstreckung). Um eine gute Benetzung der Polyesterfolie mit der Beschichtung zu erzielen, wird/werden die Folienoberflächeln bevorzugt zunächst coronabehandelt. Die Beschichtung(en) kann/können mit einem gängigen geeigneten Verfahren wie mit einem Schlitzgießer oder einem Sprühverfahren aufgetragen werden. Besonders bevorzugt ist die Aufbringung der Beschichtung(en) mittels des "Reverse gravure-roll coating"-Verfahrens, bei dem sich die Beschichtung(en) äußerst homogen auftragen lässt/lassen. Ebenfalls bevorzugt ist die Auftragung durch das Meyer-Rod-Verfahren, mit dem sich größere Beschichtungsstärken erzielen lassen. Die Beschichtungskomponenten können während der Trocknung und Verstreckung der Polyesterfolie und besonders bei der anschließenden Wärmebehandlung, die bis zu 240°C erreichen kann, miteinander reagieren. Das In-Line-Verfahren ist hierbei wirtschaftlich attraktiver, da eine oder beide Beschichtung, gleichzeitig mit dem Herstellungsprozess der Folie aufgetragen werden können, so dass ein Prozessschritt (s.u.: Off-Line Verfahren) eingespart werden kann.

In einem alternativen Verfahren werden eine oder beide Beschichtungen durch Off-Line-Technologie aufgetragen. Dabei wird die Beschichtung gemäß der vorliegenden Erfindung mittels Off-Line-Technologie in einem zusätzlichen, der Folienherstellung nachgeordnetem Prozessschritt auf die entsprechende(n) Oberfläche(n) der Polyesterfolie aufgebracht, wobei beispielsweise eine Gravurwalze (forward gravure) verwendet wird. Die Höchstgrenzen der Beschichtungsdicke werden durch die Verfahrensbedingungen und die Viskosität der Beschichtungsdispersion festgelegt und finden ihre Obergrenze in der Verarbeitbarkeit der Beschichtungsdispersion.

### Verfahren zur Rezyklierung einer Polyesterfolie

Die vorliegende Erfindung betrifft ein Verfahren zur Rezyklierung einer Polyesterfolie umfassend die Schritte,
- Zerkleinern einer mehrschichtigen, erfindungsgemäßen Polyesterfolie umfassend mindestens eine Deckschicht (A) und eine Basisschicht (B),
- in Kontakt bringen der zerkleinerten Polyesterfolie mit einer wässrigen NaOH-haltigen Lösung,
- Abtrennen der zerkleinerten Polyesterfolie, wobei die zerkleinerte Polyesterfolie keine Deckschicht (A) mehr umfasst,
- Trocknen der zerkleinerten Polyesterfolie.

Industrielle Waschprozesse zur Reinigung von gebrauchten Kunststoffgegenständen sind hinreichend bekannt. Insbesondere sind zahlreiche Prozesse offenbart, wie sie zur Aufbereitung von PET Flaschen praktiziert werden. Unter den Prozessen gibt es viele, die in etwa folgendem Schema folgen: Sammeln der zu rezyklierenden Abfälle, Vorsortieren in entsprechende Kunststoffsorten (soweit möglich), mechanisches Zerkleinern der Abfälle zur Erhöhung der Oberfläche, Reinigungsschritt unter Zuhilfenahme flüssiger Waschlaugen zur Entfernung von Kontaminationen, Trocknungsschritt.

In dem erfindungsgemäßen Verfahren zur Rezyklierung einer Polyesterfolie werden gebrauchte Polyesterfolien eingesetzt. Diese liegen in einem vorsortierten Zustand vor (sortenrein), sind aber noch mit Kontaminationen versehen, die eine direkte Rezyklierung verhindern. Unter Kontaminationen sind jegliche Verunreinigungen zu verstehen, die aus der vorangegangenen Verwendung und Lagerung der gebrauchten Polyesterfolie resultieren und eine direkte Rezyklierung verhindern.

Das Hauptaugenmerk der vorliegenden Erfindung liegt auf dem Reinigungsschritt unter Zuhilfenahme wässriger Alkalihydroxid-haltiger Lösungen. Im Folgenden wird davon ausgegangen, dass die zu rezyklierenden Abfälle bereits in vorsortiertem Zustand vorliegen (sortenrein), aber noch mit Kontaminationen versehen sind, die eine direkte Rezyklierung verhindern. Im besonderen Fokus stehen Abfälle von Prozessfolien aus Polyester, wie beispielsweise bei silikonisierten Linern und solche die in Prägeprozessen (hot stamping, cold transfer) als sogenannte Carrierfilme eingesetzt werden. Dieser Carrierfilm trägt nach Benutzung großflächig noch Lackreste an den Stellen, wo aufgrund des Prägemotivs kein Transfer vorgesehen war.

Für den Waschvorgang ist es vorteilhaft, dass die Folienabfälle zerkleinert werden. Dies erleichtert die Durchmischung von Folienschnippseln/Häckseln in flüssigen Medien und erhöht zudem die Angriffsfläche der Waschlauge. Hinsichtlich der Art und Weise des Zerkleinerns der Folie gibt es prinzipiell keine Limitierungen, solange gewährleistet ist, dass die Folie zu Häckseln zerkleinert wird, die in dem erfindungsgemäßen Verfahren zur Rezyklierung eingesetzt werden können.

Beispielsweise kann für die Zerkleinerung der Folie eine Folienschneidmühle verwendet werden. Solche Folienschneidmühlen werden unter anderem von der Firma Pallmann vertrieben. Durch die Verwendung einer solchen Folienschneidmühle wird die Folie zu Häckseln zerkleinert, die bevorzugt eine Größe von 5-50 mm Länge und 2-20 mm Breite besitzen.

Es ist schwierig ausschließlich mit Hilfe von Wasser und zugesetzten Tensiden eine Befreiung der Abfälle von Kontaminationen zu gewährleisten. Der Einsatz von mechanischen Elementen im Waschprozess ist zwar eine Möglichkeit die Effizienz des Reinigungsprozesses stark zu erhöhen. Jedoch sind die Möglichkeiten bei bereits kleinteilig vorliegenden Abfällen gering, um beispielsweise mit Hilfe von Bürsten oder Reibungseinwirkung eine ausreichende Reinigungsleistung zu erzielen. Dies macht es notwendig, auf gezielte chemische Behandlung der Abfälle zurück zu greifen. Im Falle von Polyesterabfällen kann der Umstand ausgenutzt werden, dass durch alkalischen Angriff die Esterbildung umgekehrt werden kann, was auch als Verseifung bezeichnet wird. Es wurde überraschend gefunden, dass auf der Oberfläche der Folienabfälle anhaftende Verunreinigungen, die ohne mechanische Einwirkung nicht ablösbar wären, abgelöst werden können, indem die obersten Lagen der Polyesteroberfläche durch die Verseifung mitsamt der Verunreinigung herausgelöst werden. Der anhaftende Schmutz muss also nicht in der Lauge lösbar sein, sondern die Reinigungswirkung kommt dadurch zustande, dass die schmutztragende Polyestermatrix lösbar ist. Voraussetzung dafür ist eine ausreichende Einwirkdauer des alkalischen Mediums, sowie geeignete Prozessbedingungen (zum Beispiel Temperatur, Dauer und Konzentration der Alkalihydroxid-haltigen Lösung).

Bei zu langer Einwirkdauer ist ein Schwund an rezyklierfähigem Polyestermaterial zu beklagen, da die Verseifungsreaktion nicht nur an den verschmutzten Stellen eintritt, sondern auch an unverschmutzten Stellen der Abfälle und so verhältnismäßig große Mengen an Polyester unnötig verseift werden. Verseiftes Material liegt anschließend weitestgehend in Form von Monomeren vor, und steht dem Rezyklierprozess nicht mehr zur Verfügung. Die in der Waschlauge gelösten Monomere müssten in weiteren Schritten aufwendig abgetrennt und wieder zu Polyester polykondensiert werden. Wird hingegen die Einwirkdauer soweit reduziert, dass die Verluste von sauberem Polyester durch Verseifung gering bleiben, riskiert man eine unvollständige Reinigungswirkung, und somit die Verschleppung von Kontamination in den Rezyklierungskreislauf. Letzteres würde die Güte des resultierenden Rezyklats stark vermindern, weshalb eine unvollständige Reinigung unter allen Umständen zu verhindern ist.

Daher sollen die Folienabfälle nur an der Oberfläche, an der Verschmutzungen anhaften können, schnell von der Alkalihydroxid-haltigen Lösung verseift werden, das innere Gefüge jedoch nur langsam. Auf diese Weise kann innerhalb der erfindungsgemäßen Reaktionsdauer eine vollständige Reinigung gewährleistet werden und gleichzeitig werden die Verluste durch Verseifung in Grenzen gehalten, da die Verseifungsreaktion an den tiefer gelegenen Bereichen der Abfälle nur noch langsam voranschreitet. Aus diesem Grund ist die erfindungsgemäße Polyesterfolie mehrschichtig aufgebaut, so dass die Basisschicht (B) (= inneren Teile der Folienabfälle) langsam verseifbar ist, und die Deckschicht (A) (= äußeren Schichten der Abfälle) schnell verseifbar ist.

Erfindungsgemäß wird für die Rezyklierung eine wässrige Alkalihydroxid-haltige Lösung verwendet, mit der die zerkleinerte, mehrschichtige Polyesterfolie in Kontakt gebracht wird. Bevorzugt ist die wässrige Alkalihydroxid-Lösung eine wässrige NaOH-haltige Lösung oder eine wässrige KOH-haltige Lösung.

Die Alkalihydroxid-haltige Lösung ist bevorzugt eine 1 bis 10 Gew.-%ige Lösung, besonders bevorzugt eine 1 bis 3 Gew.-%ige Lösung.

Während der Rezyklierung wird die zerkleinerte Polyesterfolie mit der Alkalihydroxid-haltigen Lösung in Kontakt gebracht. Die Alkalihydroxid-haltige Lösung ist auf eine Temperatur von 60 bis 98°C, bevorzugt 80 bis 95°C temperiert. Das in Kontakt bringen der zerkleinerten mehrschichtige Polyesterfolie mit der wässrigen Alkalihydroxid-haltigen Lösung wird innerhalb eines Zeitraum von 5 bis 30 Minuten, bevorzugt 7 bis 15 Minuten durchgeführt. Zur Erhöhung der Benetzung der Polyesterabfälle durch die wässrige Alkalihydroxid-haltige Lösung können geeignete Tenside zugesetzt. Geeignete Tenside sind sowohl ionische als auch nicht-ionische Tenside, wie beispielsweise Natriumlaurylsulfat und Polyalkylenglykolether.

Das in Kontakt bringen kann dadurch geschehen, dass die zerkleinerte Polyesterfolie in die wässrige Alkalihydroxid-Lösung gegeben wird oder die wässrige Alkalihydroxid-Lösung zu der zerkleinerten Polyesterfolie gegeben wird. Das in Kontakt bringen kann beispielsweise in einem Rührkessel geschehen. In diesem Fall werden die Folienhäcksel zur Alkalihydroxid-haltigen Lösung gegeben und mechanisch durch einen Rührer umgewälzt. Alternativ kann die Durchmischung in einem Wirbelschichtreaktor durchgeführt werden.

Anschließend wird die zerkleinerte Polyesterfolie abgetrennt, gegebenenfalls mit Wasser abgespült und getrocknet. Für die Trocknung der Häcksel kommen alle gängigen Trockenmethoden in Betracht. Die Trocknung der Häcksel kann beispielsweise in einem heißen Luftstrom bei 110°C durchgeführt werden oder in einem nachgeschalteten Wirbelschichtreaktor.

Während des in Kontakt Bringens der zerkleinerten Polyesterfolie mit der wässrigen Alkalihydroxid-Lösung wurde die Deckschicht (A) vollständig aufgelöst. Daher weist die resultierende zerkleinerte Polyesterfolie keine Deckschicht (A) mehr auf.

Die so erhaltene rezyklierte Polyesterfolie ist qualitativ hochwertig und kann zur Herstellung neuer Polyester, insbesondere Polyesterfolien verwendet werden. Die rezyklierte Polyesterfolie kann in einem Verfahren zur Herstellung der erfindungsgemäßen mehrschichtigen, koextrudierten Polyesterfolie verwendet werden.

Folglich betrifft die vorliegende Erfindung ein Verfahren zur Herstellung einer Polyesterfolie, in dem eine rezyklierte Polyesterfolie eingesetzt wird, die durch das erfindungsgemäße Verfahren zur Rezyklierung einer Polyesterfolie erhalten wurde und oder erhältlich ist.

### Messmethoden

Zur Charakterisierung der Folien wurden folgende Messmethoden bzw. Messverfahren benutzt.

### Bestimmung der Lösbarkeit von Folienschichten

Von der zu vermessenden Folie wird ein Stück mit den Abmessungen 5 cm x 20 cm ausgeschnitten, und an mindestens 5 Stellen mit Hilfe eines Dickentasters die Gesamtfoliendicke gemessen, und über alle Messstellen gemittelt (arithmetisches Mittel). Die Messstellen sind mit einem geeigneten Stift, oder Ähnlichem, zu markieren. In einem 500 mL Becherglas wird eine 2 Gew.-%ige wässrige NaOH-Lösung auf eine Temperatur von 90°C erhitzt. In die heiße Lösung wird das Folienstück eingetaucht, und für 10 Minuten in Ruhe verweilen gelassen. Nach Entnahme des Folienstücks wird es mit kaltem Wasser abgespült und anschließend getrocknet. An den markierten Stellen wird die Dickenmessung wiederholt, und nach entsprechende Mittelung mit den ersten Werten Verglichen. Durch Differenzbildung wird die absolute Dickenabnahme in µm ermittelt.

### Beispiele

### Verwendete Rohstoffe

| | |
|---|---|
| PET 1 | Polyethylenterephthalat (PET), Typ PET 4004 (Hersteller: Invista & Fibres GmbH, Deutschland), |
| PET 2 | Statistisches Copolyester wobei die Säurekomponente sich aus 9,8 Mol-% 5-Sulfoisophthalsäure, 90,2 Mol-% Terephthalsäure zusammensetzt; und die Diolkomponente sich aus 2,9 Mol-% Diethylenglykol und 97,1 Mol% Ethylendiol zusammensetzt. |
| MB1 | Masterbatch aus 98,5 Gew.-% PET 4004 und 1,5 Gew.-% amorphem SiO2, Typ Sylobloc 46 (Hersteller: Grace GmbH, Worms, Deutschland); mittlerer Partikeldurchmesser d50 laut Datenblatt 2,9 - 3,5 µm. |

### Herstellung einer unbeschichteten Folie

Es wurden Muster hergestellt mit einem 2-schichtigen AB-Aufbau, wobei die Deckschicht (A) eine Dicke von ca. 10 % der Gesamtfoliendicke aufwies, und die leicht lösbare Schicht darstellt. Die Basisschicht (B) besteht nur aus herkömmlichen Polyester ohne weitere Additive. Die Rohstoffe wurden durch Extrusion aufgeschmolzen und in eine Breitschlitzdüse koextrudiert um die sogenannte Vorfolie zu bilden. Von der Vorfolie, die eine Gesamtdicke von 613 µm aufwies, wurde ein Muster mit den Ausmaßen von ca. 11 x 11 cm ausgeschnitten, und mit einem Streckrahmen biaxial orientiert. Bei einer Strecktemperatur von 95°C, wurde die Folie um einen Faktor von 3,5 in Maschinenrichtung (MD) und um einen Faktor von 3,5 in Querrichtung (TD) gestreckt, und anschließend bei einer Temperatur von 225°C für eine Dauer von 30 Sekunden fixiert. Die so erhaltene biaxial gestreckte Polyesterfolie hatte eine Gesamtdicke von ca. 50 µm, wobei die Deckschickt (A) hiervon ca. 5 µm in Anspruch nahm.

**Tabelle 1: Rezepturen und Messwerte der Beispiele**

| Beispie \| | Deckschich tA | Basisschicht B | Gesamtfoliendick e vor Lösungstest [µm] | Gesamtfoliendick e nach Lösungstest [µm] | Dickenabnahme Deckschicht A [µm] |
|---|---|---|---|---|---|
| 1 | 92% PET 2 | 100% PET 1 | 48 | 42 | 6 |
| | 8 % MB1 | | | | |
| VB1 | 92% PET 1 | 1 00% PET 1 | 50,6 | 50,6 | 0 |
| | 8 % MB1 | | | | |
| | | | | | |
| VB2 | 40% PET2 | 100% PET 1 | 56 | 56 | 0 |
| | 52% PET1 | | | | |
| | 8 % MB1 | | | | |

### Beispiel 1

Neben dem leichtlöslichen Copolyester (PET 2) wurde in der Deckschicht (A) zusätzlich ein SiO₂ Pigment enthaltendes Masterbatch eingebracht, um die Wickelbarkeit der Folie zu gewährleisten. Die Mischung aus Copolyester und Masterbatch brachte keine erkennbaren Schlieren oder Gele in der Folie hervor, und das optische Erscheinungsbild ist sehr gut. Der Löslichkeitstest offenbarte, dass sich die Deckschicht (A) unter den simulierten Waschbedingungen vollständig gelöst hat. Die verbleibende Basisschicht (B) blieb optisch unversehrt zurück in der Lösung und konnte problemlos separiert werden.

### Vergleichsbeispiel 1

Eine Folie wurde wie Beispiel 1 hergestellt, jedoch mit PET 1 anstelle von PET 2. Die Deckschicht (A) konnte in dem Löslichkeitstest nicht entfernt werden.

### Vergleichsbeispiel 2

Der leichtlösliche Polyester (PET 2) aus Beispiel 1 wurde in einer niedrigeren Konzentration in die Deckschicht (A) eingearbeitet, so dass der Anteil kleiner gleich 40 Gew.-% betrug. Durch diese Zusammensetzung ist die Deckschicht (A) nicht mehr ausreichend löslich, und sie ließ sich in dem Waschversuch nicht mehr von der Basisschicht (B) trennen. Die Deckschicht (A) färbte sich während des Waschversuchs weißlich matt und opak, und neigte zu Verklebungen gegen sich selbst und mit der Gefäßwand. Ein Abtrennen der so angelösten Deckschicht (A) gelang nur unter Anwendung von zusätzlichen mechanischen Maßnahmen, bspw. durch Abschaben mit einem Holzspatel. Für eine industriell zu betreibende Aufarbeitung von Kunststoffabfällen ist dieses Verhalten jedoch nicht tolerierbar.

### Beschichtung einer Folie

Um die Eignung der Folie als Substrat für verschiedene aufzubringende Beschichtungen zu prüfen, wurden an einer Folienproduktionsanlage Folien in einer Dicke von 23 µm hergestellt, indem der Polyester bzw. die Polyestermischungen der einzelnen Schichten der Folie in Extrudern aufgeschmolzen, die entstandenen Schmelzen in einer Mehrschichtdüse zu flachen Schmelzfilmen ausformt, durch eine Breitschlitzdüse presst und auf einer Kühlwalze und einer oder mehreren Abzugswalzen abgezogen, wobei sie abgekühlt und sich verfestigte, sodann biaxial gestreckt und dabei im Inline Verfahren mit verschiedenen Beschichtungen versehen, nachfolgend thermofixiert und dann aufgewickelt wurde, und deren Funktionalität geprüft wurde. Zwecks Vergleichbarkeit wurden Muster angefertigt, bei denen sich die Beschichtungen jeweils ausschließlich auf der Deckschicht (A) befinden, als auch Muster bei denen sich die Beschichtungen ausschließlich auf der Deckschicht (C) befinden. Letztere Konfiguration steht stellvertretend für eine konventionell beschichtete Polyesterfolienoberfläche. Folgende Tabelle zeigt die Rezepturen der Polyesterfolien sowie die aufgebrachte Beschichtung.

**Tabelle 2: Beschichtung der Deckschicht (A)**

| Beispiel | Deckschicht (A) | Basisschicht (B) | Deckschicht (C) | Dicke Deckschicht (C) | Dicke Deckschicht (A) | Beschichtung |
|---|---|---|---|---|---|---|
| 2 | 80 Gew.-% | | 92 Gew.-% | 1,5 µm | 2,5 µm | C 1 |
| | PET 2 | | PET 1 | | | |
| | 12 Gew.-% | 100 Gew.-% | 8 Gew.-% | | | |
| | PET 1 | PET 1 | MB1 | | | |
| | 8 Gew.-% | | | | | |
| | MB1 | | | | | |
| 3 | 80 Gew.-% | | 92 Gew.-% | 1,5 µm | 2,5 µm | C 2 |
| | PET 2 | | PET 1 | | | |
| | 12 Gew.-% | 100 Gew.-% | 8 Gew.-% | | | |
| | PET 1 | PET 1 | MB1 | | | |
| | 8 Gew.-% | | | | | |
| | MB1 | | | | | |

### Beispiel 2

Um negative Einflüsse der Deckschicht (A) auf eine Trennbeschichtung ausschließen zu können, wurde die Funktion einer Silikonbeschichtung (C1) auf Deckschicht A und zum Vergleich auch auf Deckschicht C mit dem Releasetest überprüft. Nach Aufbringen des Klebebands auf die jeweils beschichtete Seite der Folie wurde nach Intervallen von 30 Minuten, 24 Stunden und 72 Stunden die silikonisierten Seiten hinsichtlich ihres Abtrennverhaltens mit dem Release Test untersucht. Aus Folgender Tabelle lässt sich ablesen, dass die Reieasewerte beider Seiten vergleichbar sind, und somit die Deckschicht (A) keinen negativen Einfluss auf die Funktion einer Silikonbeschichtung hat.

**Tabelle 3: Release Werte der beschichteten Deckschichten**

| | Release [g/25mm] nach 30 min | Release [g/25mm] nach 24 h | Release [g/25mm] nach 72 h |
|---|---|---|---|
| Beschichtung auf Deckschicht (A) | 12,22 | 15,33 | 19,04 |
| Beschichtung auf Deckschicht (C) | 12,01 | 14,47 | 16,98 |

### Beispiel 3

Um negative Einflüsse der Deckschicht (A) auf eine haftungsvermittelnde Beschichtung ausschließen zu können wurde die Funktion eines acrylat basierten Haftungsvermittlers (C2) hinsichtlich der Haftfestigkeit überprüft. Hierzu wurde die beschichtete Seite unter Verwendung eines Laborbeschichtungsgerätes (Coatmaster 510, Fa. Erichsen) mit einer Siebdruckfarbe beschichtet (Special Sericard CDA30, Fuji), und die so mehrfach beschichtete Folie im Ofen bei 150°C für 60 s getrocknet. Die Haftfestigkeit der Siebdruckfarbe auf der Folie wurde mit Hilfe des Klebebandes Tesa 4104 überprüft, und konnte mit einem Kennwert von 0-1 bewertet werden. Die Farbe haftet an der Haftvermittlungsbeschichtung ohne ausgerissen zu werden, unabhängig davon ob der Haftvermittler auf der Deckschicht (A) aufgebracht wurde, oder auf der Deckschicht (C).

### Beispiel 4

Nachdem die Folie ihre Tauglichkeit als Substrat zum Tragen einer fest verankerten Druckfarbe bewiesen hat, wurde die Rezyklierfähigkeit dieses Folienverbundes untersucht. Das Muster aus Beispiel 3 wurde in ca. 1,5 x 1,5 cm große Stücke zerschnitten und in einer 90°C warmen 2 Gew.-%igen wässrigen NaOH Lösung für 10 min gerührt. Die Farbe trennte sich hierbei vollständig von der Folie. Die Folienreste sanken aufgrund der höheren Dichte zu Boden, und zeigten ein vollkommen transparentes, unbescholtenes Erscheinungsbild, was die Vollständigkeit der Trennung dokumentiert.

### Vergleichsbeispiel 3

Zum Vergleich wurde das Beispiel 3 und 4 mit einer Polyesterfolie aus Vergleichsbeispiel 1 wiederholt, die über keine Löslichkeit verfügt. Die Haftvermittlungsbeschichtung, sowie die Siebdruckfarbe darauf, ließen sich ebenso problemlos aufbringen wie in Beispiel 3. Beim Versuch den Folienverbund durch ein Bad in 2 Gew.-%ige NaOH Lösung aufzutrennen, zeigte sich jedoch keinerlei Trennung, so dass das Polyestermaterial nicht zurückgewonnen werden konnte.

## Patentansprüche

1. Mehrschichtige, koextrudierte Polyesterfolie umfassend mindestens eine Deckschicht (A) und eine Basisschicht (B), wobei
die mindestens eine Deckschickt (A) zu mindestens 60 Gew.-% aus einem Copolyester besteht, der aus von Dicarbonsäuren und Diolen abgeleiteten Einheiten besteht, wobei
- die von Dicarbonsäuren abgeleiteten Einheiten mindestens 65 Mol-% an von Terephthalsäure abgeleiteten Einheiten
und mindestens 5 Mol-% an von 5-Sulfo-lsophthalsäure abgeleitete Einheiten umfassen, und
- die von Diolen abgeleiteten Einheiten mindestens 90 Mol-% an von Ethylenglykol abgeleiteten Einheiten umfassen.

2. Polyesterfolie nach Anspruch 1, **dadurch gekennzeichnet, dass** die von Dicarbonsäuren abgeleiteten Einheiten aus 65 bis 95 Mol-% von Terephthalsäure abgeleiteten Einheiten, 5 bis 15 Mol-% von 5-Sulfo-Isophthalsäure abgeleitete Einheiten und 0 bis 30 Mol-% von Isophthalsäure abgeleitete Einheiten bestehen, und
die von Diolen abgeleiteten Einheiten aus 90 bis 100 Mol-% von Ethylenglykol abgeleiteten Einheiten und 0-10 Mol-% von Diethylenglykol abgeleiteten Einheiten bestehen,
wobei sich die von Dicarbonsäuren abgeleiteten Einheit und die von Diolen abgeleiteten Einheiten jeweils zu 100 Mol-% addieren

3. Polyesterfolie nach Anspruch 1 oder 2, **dadurch gekennzeichnet, dass** die mindestens eine Deckschicht (A) eine erste Deckschicht (A) darstellt und die Polyesterfolie zusätzlich eine zweite Deckschicht (A) umfasst, die auf der der ersten Deckschicht (A) gegenüberliegenden Oberfläche der Polyesterfolie aufgebracht ist.

4. Polyesterfolie nach einem oder mehreren der Ansprüche 1 bis 3, **dadurch gekennzeichnet, dass** die Polyesterfolie eine Deckschicht (C) umfasst, die auf der der Deckschicht (A) gegenüberliegenden Oberfläche der Polyesterfolie aufgebracht ist.

5. Polyesterfolie nach einem oder mehreren der Ansprüche 1 bis 4, **dadurch gekennzeichnet, dass** die mindestens eine Deckschicht (A) eine Dicke von 0,5 µm bis 6 bevorzugt von 1 µm bis 3 µm besitzt.

6. Polyesterfolie nach einem oder mehreren der Ansprüche 1 bis 5, **dadurch gekennzeichnet, dass** auf der mindestsens einen Deckschicht (A) eine Beschichtung aufgebracht ist, wobei die Beschichtung bevorzugt mittels eines In-Line Verfahrens aufgebracht ist.

7. Polyesterfolie nach Anspruch 6, **dadurch gekennzeichnet, dass** die Beschichtung eine Haftvermittlungsbeschichtung oder eine Antihaftbeschichtung ist.

8. Verfahren zur Herstellung einer Folie nach Anspruch 1, wobei man zunächst den Polyester bzw. die Polyestermischung der einzelnen Schichten der Folie in Extrudern aufschmilzt, die entstandenen Schmelzen in einer Mehrschichtdüse zu flachen Schmelzfilmen ausformt, durch eine Breitschlitzdüse presst und auf einer Kühlwalze und einer oder mehreren Abzugswalzen abzieht, wobei sie abkühlt und sich verfestigt, sodann biaxial streckt, nachfolgend thermofixiert und die Folie dann aufgewickelt,
**dadurch gekennzeichnet, dass** die mindestens eine Deckschickt (A) zu mindestens 60 Gew.-% aus einem Copolyester besteht, der aus von Dicarbonsäuren und Diolen abgeleiteten Einheiten besteht, wobei
- die von Dicarbonsäuren abgeleiteten Einheiten mindestens 65 Mol-% an von Terephthalsäure abgeleiteten Einheiten
und mindestens 5 Mol-% an von 5-Sulfo-Isophthalsäure abgeleitete Einheiten umfassen, und
- die von Diolen abgeleiteten Einheiten mindestens 90 Mol-% an von Ethylenglykol abgeleiteten Einheiten umfassen,
wobei sich die von Dicarbonsäuren abgeleiteten Einheit und die von Diolen abgeleiteten Einheiten jeweils zu 100 Mol-% addieren.

9. Verfahren nach Anspruch 8, **dadurch gekennzeichnet, dass** die Folie während des Herstellverfahrens mit einer Beschichtungsmasse beschichtet wird.

10. Verfahren zur Rezyklierung einer Polyesterfolie umfassend die Schritte,
- Zerkleinern einer mehrschichtigen Polyesterfolie nach Anspruch 1, umfassend mindestens eine Deckschicht (A) und eine Basisschicht (B),
- in Kontakt bringen der zerkleinerten Polyesterfolie mit einer wässrigen Alkalihydroxid-haltigen Lösung,
- Abtrennen der zerkleinerten Polyesterfolie, wobei die zerkleinerte Polyesterfolie keine Deckschicht (A) mehr umfasst,
- Trocknen der zerkleinerten Polyesterfolie.

11. Verfahren nach Anspruch 10, **dadurch gekennzeichnet, dass** die wässrige Alkalihydroxid-haltige Lösung eine NaOH- oder KOH-haltige Lösung ist.

12. Verfahren nach Anspruch 10 oder 11, **dadurch gekennzeichnet, dass** die wässrige Alkalihydroxid-haltige Lösung eine 1 bis 10 Gew.-%ige wässrige NaOH- oder KOH-haltige Lösung ist und eine Temperatur von 60 bis 98°C, bevorzugt 80 bis 95°C besitzt.

13. Verfahren nach einem oder mehreren der Ansprüche 10 bis 12, **dadurch gekennzeichnet, dass** das in Kontakt bringen mit der wässrigen Alkalihydroxid-haltigen Lösung für einen Zeitraum von 5 bis 30 Minuten, bevorzugt von 7 bis 15 Minuten durchgeführt wird.

14. Verwendung der Polyesterfolie nach einem der Ansprüche 1 bis 8 als Trägerfolie, bevorzugt für Etiketten und Prägefolien.

15. Verfahren zur Herstellung einer Polyesterfolie, **dadurch gekennzeichnet, dass** eine rezyklierte Polyesterfolie erhältlich durch ein Verfahren nach Anspruch 10 eingesetzt wird.
